# FASCICULE DE BREVET EUROPEEN

(11) **EP 1 687 607 B1**
(45) Date de publication et mention de la délivrance du brevet: **02.08.2017**
(21) Numéro de dépôt: 04805272.4
(22) Date de dépôt: 22.10.2004
(51) Int. Cl.: G01N 1/00

(54) **BLOC SERINGUES POUR AUTOMATE D'ANALYSE DE LIQUIDES, NOTAMMENT POUR L'ANALYSE SANGUINE**
SPRITZENBLOCK FÜR EIN FLÜSSIGKEITSANALYSEGERÄT, VOR ALLEM FÜR BLUTTESTS
SYRINGE BLOCK FOR A LIQUID ANALYSER, ESPECIALLY FOR BLOOD TESTS

(30) Priorité: 18.11.2003 FR 0313452
(43) Date de publication de la demande: 09.08.2006
(73) Titulaire: BIT Group France, 34099 Montpellier (FR)
(72) Inventeur: CHAMPSEIX, Serge, F-19170 Tarnac (FR); CHAMPSEIX, Henri, F-34980 Saint Gely du Fesc (FR)
(74) Mandataire: Pontet Allano & Associes
(86) Numéro de dépôt international: PCT/FR2004/002708
(87) Numéro de publication internationale: WO 2005/062015

(56) Documents cités:
- EP-A- 0 508 495
- EP-A- 0 802 413
- WO-A-99/26056
- US-A- 4 199 013
- US-A- 4 254 084
- US-A- 4 607 526
- US-A- 5 988 236

## Description

La présente invention se rapporte à un bloc seringues, c'est à dire à un ensemble de plusieurs seringues, utilisées dans un automate d'analyse de liquide, notamment d'analyse sanguine. Elle se rapporte en outre à un automate équipé d'un tel bloc seringues.

Les seringues sont un élément essentiel d'un automate d'analyse. Leur fonctionnement doit être fiable, notamment en ce qui concerne le dosage précis des liquides à analyser ou des liquides réactifs servant à l'analyse. Il en va de même pour les systèmes annexes aux seringues, tels la tuyauterie, la motorisation, les vannes et l'électronique associés. Il convient donc de réduire au maximum les risques de panne et fuites diverses qui pourraient, soit fausser l'analyse, soit la rendre impossible. Il convient aussi que les coûts de réalisation, les temps et les coûts de maintenance de ces automates, soient le plus réduits possibles.

Dan le but d'augmenter la fiabilité de tels automates il a notamment été proposé de réduire le nombre de moteurs commandant le mouvement des seringues. Ainsi, le document FR 2.815.719 propose une motorisation commune de plusieurs seringues servant au dosage des réactifs.

Le document WO 99/26056 décrit un bloc seringues comprenant plusieurs seringues dont certaines ont des pistons entraînés simultanément, le bloc comprenant également une seringue formant pompe à air, un collecteur pourvu d'électrovannes et de canalisations agencées de façon que le bloc ait un encombrement réduit.

Cependant, les automates présentent encore de nombreux désavantages, notamment celui d'intégrer de nombreux câblages, hydrauliques et électriques entre différents éléments constituants, ce qui entraîne un coût notamment pour leur assemblage et pour leur maintenance. Ainsi, les matériaux constituant la tuyauterie hydraulique sont particulièrement sensibles au vieillissement.

Le but de l'invention est de proposer un dispositif permettant d'améliorer la fiabilité d'un automate d'analyse, tout en diminuant les coûts d'assemblage et de maintenance.

Selon l'invention, comme définie dans la revendication 1, un tel dispositif est un bloc seringues, notamment adapté pour être utilisé dans un automate d'analyse d'un échantillon liquide, ledit bloc comprenant plusieurs seringues et un collecteur (aussi appelé manifold), les seringues comprenant chacune une chemise et un piston définissant entre eux un volume intérieur, ledit collecteur comprenant des électrovannes de commutation, des premières canalisations reliant directement les électrovannes à des volumes intérieurs respectifs, dont les variations permettent le déplacement de fluides ou de liquides utilisés par exemple par l'automate, et des deuxièmes canalisations s'étendant depuis les électrovannes vers des accessoires, notamment en direction de contenants pour l'échantillon et/ou d'autres liquides. Ainsi, les seringues étant montées directement sur le collecteur, on limite le câblage hydraulique, donc notamment les risques de fuite.

Les accessoires peuvent avantageusement être reliés directement aux électrovannes par les deuxièmes canalisations ou bien une tuyauterie peut prolonger les deuxièmes canalisations, entre le collecteur et les accessoires.

Avantageusement, le bloc seringues peut en outre comprendre une pompe à air. La pompe à air peut comprendre au moins une, voir plus, seringues. Cette pompe peut être notamment prévue pour créer une dépression dans un bac, afin de prélever un échantillon en vue de son comptage, dans un automate d'analyse. Elle peut en outre être prévue pour l'aspiration de déchets, c'est à dire de liquides inutiles, notamment s'ils ont servi dans une analyse maintenant terminée. Ces déchets peuvent aussi être un liquide de rinçage ayant servi. La pompe à air permet l'aspiration depuis déchets dans des bacs ou des chambres servant à une analyse, puis leur rejet dans une poubelle.

Le bloc seringues peut comprend une ou plusieurs pièces dans lesquelles les canalisations internes sont réalisées par moulage. Ainsi, ces pièces peuvent être en matière plastique. Les canalisations ainsi réalisées, sont en particulier peu sensibles au vieillissement.

La pompe à air peut comprendre au moins deux seringues, actionnées simultanément ou pas, ce qui permet de lui donner une grande capacité tout en limitant son encombrement. En outre, cela permet d'avoir un diamètre de chemise moins important pour chacune des seringues formant la pompe, donc moins de problèmes d'étanchéité et un effort moins important sur chacun de leur piston respectif.

Avantageusement, les pistons de toutes les seringues seront rigidement liés entre eux de sorte qu'ils ont simultanément un même mouvement à l'intérieur de leur chemise respective. Alors, les électrovannes peuvent être disposées pour que les seringues respectives non utilisées, bien que mues simultanément à une seringue utilisée, aspirent puis rejettent au même endroit un liquide éventuel, réalisant ainsi une opération neutre.

Le bloc seringues peut en outre comprendre certains éléments nécessaires au fonctionnement de l'appareil auquel il est intégré, notamment d'un automate d'analyse, ces éléments étant avantageusement fixés sur le collecteur, qui sert ainsi de support. Parmi ces éléments peuvent être au moins une chambre de dilution et/ou une chambre de mesure et/ou une chambre d'incubation et/ou une cuve à circulation hydraulique et/ou un banc optique. Un élément peut aussi être une carte portant des circuits électroniques, lesdits circuits électroniques étant utilisés dans l'analyse pour le cas ou ledit bloc est utilisé dans un automate d'analyse. Ainsi, intégrés au bloc seringues, tous ces éléments sont proches les uns des autres, et notamment du collecteur et des vannes qui distribuent les différents liquides.

Le bloc seringues pourra encore être disposé dans une enceinte climatisée. Les liquides et les éléments, peuvent être maintenus dans des conditions idéales pour, respectivement, leur analyse et leur fonctionnement.

En outre, l'invention comprend encore un automate d'analyse, notamment un automate d'analyse sanguine comprenant un bloc seringues selon l'invention.

D'autres particularités et avantages de l'invention ressortiront encore de la description ci-après, relative à des exemples non limitatifs.

Aux dessins annexés :
- la figure 1 est une vue en perspective d'un bloc seringues selon l'invention ;
- la figure 2 est une pièce d'un collecteur pour un bloc seringues selon l'invention;
- la figure 3 est un schéma fonctionnel d'un automate d'analyse selon l'invention ; et,
- La figure 4 est une vue d'un autre mode de réalisation d'un bloc seringues.

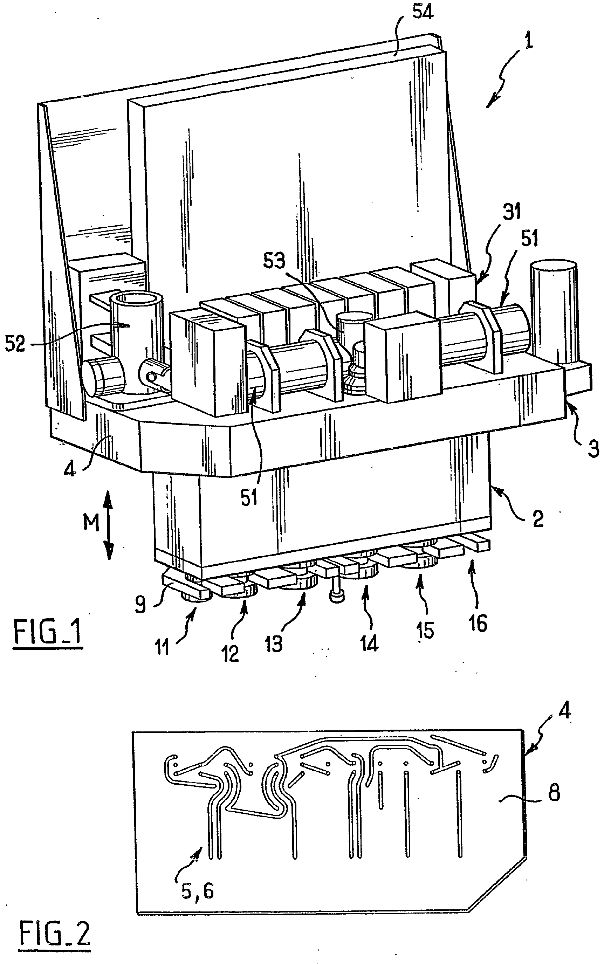

La figure 1 représente un bloc seringues 1, prévu pour être intégré dans un automate d'analyse sanguine.

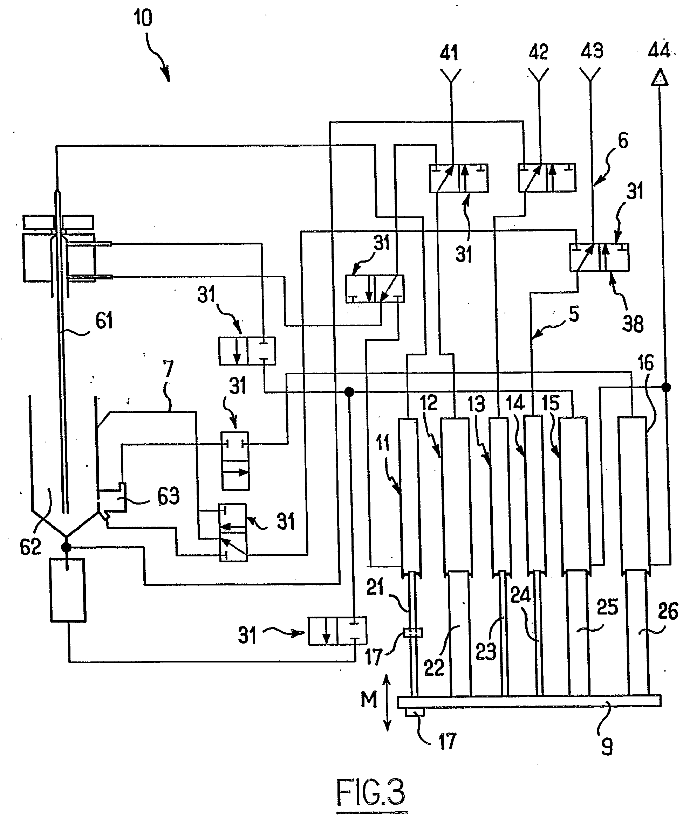

Il comprend un ensemble de six seringues 11-16 disposées parallèlement, dont les chemises sont toutes formées dans une seule et même pièce de chemise 2 sensiblement parallélépipédique. Les chemises sont disposées verticalement, de sorte qu'un piston 21-26 (voir figure 3) respectif coulisse à travers leur extrémité inférieure respective, au travers d'une face inférieure de la pièce de chemise 2.

A la figure 1, les pistons sont tous fixés rigidement à une seule et même bride 9. la bride est reliée à un moteur de sorte qu'elle peut entraîner tous les pistons dans un même mouvement M, ici de translation verticale, à l'intérieur de leur chemise respective. A la figure 3, tous les pistons sont fixés rigidement à la bride, sauf le piston 21, qui comprend deux butées 17 pour la bride 9, l'une dans chaque sens de translation selon le mouvement M, définissant ainsi une course morte pour le piston 21, de la seringue 11.

Le collecteur comprend une base 4 ayant sensiblement la forme d'un parallélépipède. La pièce de chemise est fixée par une surface supérieure, contre une face inférieure de la base 4. Il comprend plusieurs électrovannes 31 fixées sur la face supérieure dudit parallélépipédique. Le collecteur comprend en outre, formé par moulage dans le parallélépipède (voir la pièce de la figure 2) un réseau 5,6 de canalisations. Ce réseau comprend des premières canalisations 5, internes, reliant chaque seringue à au moins une électrovanne respective. Il comprend en outre des deuxièmes canalisations 6, s'étendant depuis les électrovannes vers, par exemple, des contenants pour un échantillon, à analyser ou en cours d'analyse, ou vers des contenants pour d'autres liquides 41-43.

Comme illustré à la figure 2, le réseau est réalisé par moulage dans pièce 8 formant partie de la base 4. Une autre pièce, non représentée, complémentaire de la pièce 8, complète la forme des canalisations.

Le collecteur sert en outre, sur sa face supérieure, de support à des éléments de l'automate d'analyse, en particulier un banc optique 51, une cuve de dilution et de comptage 52, une cuve de mesure optique et de résistivité 53, et une carte électronique 54, servant à l'analyse.

On va maintenant décrire plus particulièrement la figure 3 représentant schématiquement le fonctionnement d'un automate d'analyse 10. Les seringues 11-16 comprennent une seringue 11 affectée au prélèvement d'un échantillon sanguin brut, c'est à dire tel qu'il est présenté initialement à l'automate, grâce à une aiguille 61 et au nettoyage de l'aiguille.

Les seringues comprennent en outre une seringue 12, pour la manipulation d'un produit diluant 41, une seringue 13, pour la manipulation d'un produit lytique 41, une seringue 14 pour la manipulation d'un produit nettoyant 42, et deux seringues 15,16, couplées de sorte qu'elles forment une pompe à air, particulièrement affectée à l'évacuation de déchets 44, au cours ou en fin de l'analyse.

L'échantillon brut est introduit dans l'automate à l'aide de l'aiguille 61, puis déposé par cette aiguille dans un bac 62 servant notamment à sa dilution. Les seringues 15,16 formant la pompe à air, peuvent en particulier être utilisées pour prélever un échantillon dans un récipient 63, communiquant directement avec le bac 62, en vue d'un comptage. Ce prélèvement est effectué en créant une dépression à l'intérieur du récipient 63 à l'aide de la pompe à air.

Au lieu d'une dépression, la pompe à air peut être aussi utilisée pour créer une surpression, par exemple pour assurer l'homogénéisation d'un mélange.

Les différentes positions des électrovannes permettent d'affecter une tâche à l'une des seringues, tandis que les autres ont un fonctionnement neutralisé, bien que les pistons respectifs de ces autres seringues, soient entraînés dans un même mouvement M que ladite une seringue.

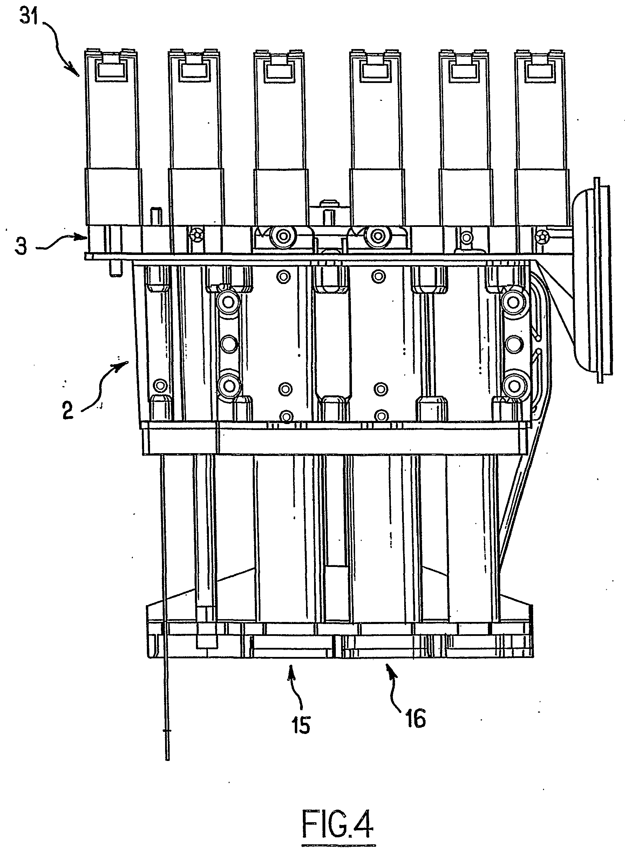

Le bloc seringues de la figure 4 est un mode de réalisation allégé relativement au bloc seringue de la figure 1. Il comprend un collecteur 3, supportant six électrovannes 31 et cinq seringues 2, dont deux seringues 15,16 forment une pompe à air.

Bien sûr, l'invention n'est pas limitée aux exemples qui viennent d'être décrits et de nombreux aménagements peuvent être apportés à ces exemples sans sortir du cadre de l'invention.

Notamment, les différentes pièces et éléments de l'invention, peuvent être, en nombre et en forme, différents de ce qui a été décrit, pour autant que cela n'affecte pas leur fonction.

Les premières ou/ou deuxièmes canalisations peuvent être réduites à de simples trous, d'épaisseur suffisante pour traverser une pièce du collecteur reliant, par exemple, une électrovanne et une seringue associées.

Les premières et/ou deuxièmes canalisations peuvent être réalisées par tout autre moyen que l'usinage ou le moulage. Elles peuvent aussi, au lieu de ne former qu'une seule couche de canalisations comprises entre deux pièces complémentaires, former plusieurs couches de canalisations superposées entre elles et séparées deux à deux par une pièce adaptée, dans laquelle peut être réalisée l'une des deux couches ainsi séparées.

## Revendications

1. Bloc seringues (1), notamment adapté pour être utilisé dans un automate d'analyse (10) d'un échantillon liquide, ledit bloc comprenant un collecteur (3) et plusieurs seringues (11-16), parmi lesquelles :
- une seringue (11) affectée au prélèvement d'un échantillon sanguin brut,
- une seringue (12) pour la manipulation d'un produit diluant (41)
- une seringue (13) pour la manipulation d'un produit lytique,
- et au moins une seringue (15, 16) formant une pompe à air, les seringues comprenant chacune une chemise et un piston (21-26) définissant entre eux un volume intérieur, ledit collecteur comprenant des électrovannes de commutation (31), des premières canalisations (5) reliant directement les électrovannes à des volumes intérieurs respectifs et des deuxièmes canalisations (6) s'étendant depuis les électrovannes en direction de contenants respectifs pour l'échantillon et/ou d'autres liquides (41-44), **caractérisé en ce que** les pistons de toutes les seringues sont rigidement liés entre eux de sorte qu'ils ont simultanément un même mouvement (M) à l'intérieur de leur chemise respective, les différentes électrovannes de commutation étant positionnées de façon à affecter une tâche à l'une des seringues, tandis que les autres ont un fonctionnement neutralisé, bien que les pistons respectifs de ces autres seringues soient entrainés dans le même mouvement (M) que ladite seringue, les chemises de toutes les seringues étant montées directement sur le collecteur (3).

2. Bloc seringues selon la revendication 1, **caractérisé en ce que** la pompe à air comprend au moins deux seringues (15,16).

3. Bloc seringues selon la revendication 1 ou 2, **caractérisé en ce que** le collecteur comprend une ou plusieurs pièces (8) dans laquelle les premières et/ou deuxièmes canalisations sont réalisées, notamment par moulage ou usinage.

4. Bloc seringues selon l'une des revendications 1 à 3, **caractérisé en ce que** la pompe à air est utilisée pour créer une dépression pour le prélèvement d'un échantillon en vue d'une étape de comptage au cours d'une analyse dans un automate d'analyse.

5. Bloc seringues selon l'une des revendications 1 à 4, **caractérisé en ce que** la pompe à air est utilisée pour l'évacuation des déchets (44), notamment dans un automate d'analyse lorsqu'une analyse est terminée.

6. Bloc seringues selon l'une des revendications 1 à 5, **caractérisé en ce qu'**il comprend au moins une chambre de dilution, celle-ci pouvant être fixée sur le collecteur et/ou pouvant être directement reliée à une électrovanne respective, par une canalisation parmi les deuxièmes canalisations.

7. Bloc seringues selon l'une des revendications 1 à 6, **caractérisé en ce qu'**il comprend au moins une chambre de mesure, celle-ci pouvant être fixée sur le collecteur et/ou pouvant être directement reliée à une électrovanne respective, par une canalisation parmi les deuxièmes canalisations.

8. Bloc seringues selon l'une des revendications 1 à 7, **caractérisé en ce qu'**il comprend au moins une chambre d'incubation, celle-ci pouvant être fixée sur le collecteur et/ou pouvant être directement reliée à une électrovanne respective, par une canalisation parmi les deuxièmes canalisations.

9. Bloc seringues selon l'une des revendications 1 à 8, **caractérisé en ce qu'**il comprend au moins une cuve à circulation hydraulique, celle-ci pouvant être fixée sur le collecteur et/ou pouvant être directement reliée à une électrovanne respective, par une canalisation parmi les deuxièmes canalisations.

10. Bloc seringues selon l'une des revendications 1 à 9, **caractérisé en ce qu'**il comprend au moins un banc optique (51), celui-ci pouvant être fixé sur le collecteur et/ou pouvant être directement relié à une électrovanne respective, par une canalisation parmi les deuxièmes canalisations.

11. Bloc seringues selon l'une des revendications 1 à 10, **caractérisé en ce qu'**il comprend au moins une carte (54) portant des circuits électroniques, lesdits circuits électroniques étant utilisés dans l'analyse pour le cas ou ledit bloc est utilisé dans un automate d'analyse, ladite carte pouvant être fixée sur le collecteur.

12. Bloc seringues selon l'une des revendications 1 à 11, **caractérisé en ce qu'**il est disposé dans une enceinte climatisée.

13. Automate d'analyse (10), notamment automate d'analyse sanguine comprenant un bloc seringues (1) selon l'une des revendications 1 à 12

## Patentansprüche

1. Spritzenblock (1), der insbesondere dazu ausgelegt ist, bei einem Analysegerät (10) zur Analyse einer Flüssigprobe verwendet zu werden, wobei der Block eine Sammeleinrichtung (3) und mehrere Spritzen (11 - 16) enthält, darunter:
- eine Spritze (11), die der Entnahme einer Rohblutprobe zugewiesen ist,
- eine Spritze (12) zur Handhabung eines Verdünnungsmittels (41),
- eine Spritze (13) zur Handhabung eines Lysemittels,
- und zumindest eine Spritze (15, 16), die eine Luftpumpe bildet, wobei die Spritzen jeweils einen Mantel und einen Kolben (21 - 26) aufweisen, die zwischen einander einen Innenraum definieren, wobei die Sammeleinrichtung elektromagnetische Schaltventile (31) aufweist und erste Rohrleitungen (5) die elektromagnetischen Ventile direkt mit jeweiligen Innenräumen verbinden und zweite Rohrleitungen (6) sich von den elektromagnetischen Ventilen aus in Richtung jeweiliger Behälter für die Probe und/oder weitere Flüssigkeiten (41 - 44) erstrecken,
**dadurch gekennzeichnet, dass** die Kolben aller Spritzen starr miteinander verbunden sind, so dass sie gleichzeitig eine gleiche Bewegung (M) innerhalb ihres jeweiligen Mantels ausführen, wobei die verschiedenen elektromagnetischen Schaltventile so positioniert sind, dass sie einer der Spritzen eine Aufgabe zuweisen, während die anderen in ihrer Funktion neutralisiert sind, obgleich die jeweiligen Kolben dieser weiteren Spritzen in der gleichen Bewegung (M) mitgenommen werden wie die genannte Spritze, wobei die Mäntel aller Spritzen direkt an der Sammeleinrichtung (3) angebracht sind.

2. Spritzenblock nach Anspruch 1, **dadurch gekennzeichnet, dass** die Luftpumpe zumindest zwei Spritzen (15, 16) aufweist.

3. Spritzenblock nach Anspruch 1 oder 2, **dadurch gekennzeichnet, dass** die Sammeleinrichtung ein Teil oder mehrere Teile (8) aufweist, worin die ersten und/oder zweiten Rohrleitungen, insbesondere durch Formen oder spanende Bearbeitung, ausgebildet sind.

4. Spritzenblock nach einem der Ansprüche 1 bis 3, **dadurch gekennzeichnet, dass** die Luftpumpe dazu verwendet wird, einen Unterdruck zur Entnahme einer Probe zu erzeugen, um im Laufe einer Analyse in einem Analysegerät einen Schritt des Zählens durchzuführen.

5. Spritzenblock nach einem der Ansprüche 1 bis 4, **dadurch gekennzeichnet, dass** die Luftpumpe zum Abführen von Abfallstoffen (44) verwendet wird, insbesondere in einem Analysegerät, wenn eine Analyse beendet ist.

6. Spritzenblock nach einem der Ansprüche 1 bis 5, **dadurch gekennzeichnet, dass** er zumindest eine Verdünnungskammer enthält, wobei diese über eine der zweiten Rohrleitungen an der Sammeleinrichtung befestigt und/oder direkt mit einem jeweiligen elektromagnetischen Ventil verbunden werden kann.

7. Spritzenblock nach einem der Ansprüche 1 bis 6, **dadurch gekennzeichnet, dass** er zumindest eine Messkammer enthält, wobei diese über eine der zweiten Rohrleitungen an der Sammeleinrichtung befestigt und/oder direkt mit einem jeweiligen elektromagnetischen Ventil verbunden werden kann.

8. Spritzenblock nach einem der Ansprüche 1 bis 7, **dadurch gekennzeichnet, dass** er zumindest eine Inkubationskammer enthält, wobei diese über eine der zweiten Rohrleitungen an der Sammeleinrichtung befestigt und/oder direkt mit einem jeweiligen elektromagnetischen Ventil verbunden werden kann.

9. Spritzenblock nach einem der Ansprüche 1 bis 8, **dadurch gekennzeichnet, dass** er zumindest einen hydraulischen Umwälzbehälter aufweist, wobei dieser über eine der zweiten Rohrleitungen an der Sammeleinrichtung befestigt und/oder direkt mit einem jeweiligen elektromagnetischen Ventil verbunden werden kann.

10. Spritzenblock nach einem der Ansprüche 1 bis 9, **dadurch gekennzeichnet, dass** er zumindest eine optische Bank (51) aufweist, die über eine der zweiten Rohrleitungen an der Sammeleinrichtung befestigt und/oder direkt mit einem jeweiligen elektromagnetischen Ventil verbunden werden kann.

11. Spritzenblock nach einem der Ansprüche 1 bis 10, **dadurch gekennzeichnet, dass** er zumindest eine Leiterplatte (54) mit Schaltungen aufweist, wobei die Schaltungen bei der Analyse für den Fall verwendet werden, dass der Block in einem Analysegerät verwendet wird, wobei die Leiterplatte an die Sammeleinrichtung befestigt werden kann.

12. Spritzenblock nach einem der Ansprüche 1 bis 11, **dadurch gekennzeichnet, dass** er in einem klimatisierten Raum angeordnet ist.

13. Analysegerät (10), insbesondere Blutanalysegerät, mit einem Spritzenblock (1) nach einem der Ansprüche 1 bis 12.

## Claims

1. Syringe block (1), in particular adapted to be used in an automated liquid sample analyzer (10), said block comprising a collector (3) and several syringes (11-16), including:
- a syringe (11) assigned to take a raw blood sample,
- a syringe (12) for handling a diluting agent (41),
- a syringe (13) for handling a lytic agent,
- and at least one syringe (15, 16) forming an air pump, each of the syringes comprising a barrel and a plunger (21-26) which between them define an internal volume, said collector comprising switching solenoid valves (31), first ducts (5) linking the solenoid valves directly to respective internal volumes and second ducts (6) extending from the solenoid valves in the direction of respective containers for the sample and/or other liquids (41-44), **characterized in that** the plungers of all the syringes are rigidly connected to each other such that they simultaneously carry out the same movement (M) inside their respective barrel, the different switching solenoid valves being positioned so as to assign a task to one of the syringes while the others have a neutralized function, despite the fact that the respective plungers of these other syringes are led to carry out the same movement (M) as said syringe, the barrels of all the syringes being mounted directly on the collector (3).

2. Syringe block according to claim 1, **characterized in that** the air pump comprises at least two syringes (15,16).

3. Syringe block according to claim 1 or 2, **characterized in that** the collector comprises one or more parts (8) in which the first and/or second ducts are realized, in particular by moulding or machining.

4. Syringe block according to one of claims 1 to 3, **characterized in that** the air pump is used to create a vacuum for taking a sample with a view to a counting step during an analysis in an automated analyzer.

5. Syringe block according to one of claims 1 to 4, **characterized in that** the air pump is used for the removal of waste (44), in particular in an automated analyzer when an analysis is finished.

6. Syringe block according to one of claims 1 to 5, **characterized in that** it comprises at least a dilution chamber, which may be fixed to the collector and/or linked directly to a respective solenoid valve, by a duct among the second ducts.

7. Syringe block according to one of claims 1 to 6, **characterized in that** it comprises at least a measurement chamber, which may be fixed to the collector and/or linked directly to a respective solenoid valve, by a duct among the second ducts.

8. Syringe block according to one of claims 1 to 7, **characterized in that** it comprises at least an incubation chamber, which may be fixed to the collector and/or linked directly to a respective solenoid valve, by a duct among the second ducts.

9. Syringe block according to one of claims 1 to 8, **characterized in that** it comprises at least a vessel with hydraulic circulation, which may be fixed to the collector and/or linked directly to a respective solenoid valve, by a duct among the second ducts.

10. Syringe block according to one of claims 1 to 9, **characterized in that** it comprises at least an optical bench (51), which may be fixed to the collector and/or linked directly to a respective solenoid valve, by a duct among the second ducts.

11. Syringe block according to one of claims 1 to 10, **characterized in that** it comprises at least a card (54) bearing electronic circuits, said electronic circuits being used in the analysis in the event that said block is used in an automated analyzer, which card may be fixed to the collector.

12. Syringe block according to one of claims 1 to 11, **characterized in that** it is placed in a climatic chamber.

13. Automated analyzer (10), in particular automated blood analyzer comprising a syringe block (1) according to one of claims 1 to 12.
